# FASCICULE DE BREVET EUROPEEN

(11) **EP 1 269 847 B1**
(45) Date de publication et mention de la délivrance du brevet: **10.12.2003**
(21) Numéro de dépôt: 01430018.0
(22) Date de dépôt: 29.06.2001
(51) Int. Cl.: A01N 59/16, A01N 37/44, A01N 43/16, A01N 65/00

(54) **Composition comprenant l'association d'un extrait d'algue marine et de mélasse d'origine végétale contenant de la bétaine**
Zusammensetzung bestehend aus einem Algen Extrakt und einer Melasse pfanzlichen Ursprungs Betain enthaltend
Composition comprising an algae extract component and a molasse component from plant origin containing betaine

(43) Date de publication de la demande: 02.01.2003
(73) Titulaire: Samabiol, 84800 Isle Sur Sorgue (FR)
(72) Inventeur: Ardigier, René M.E., 84250 Le Thor (FR); Giraud, Christian A., 13940 Molleges (FR); Datin, Claude, 84800 Isle Sur Sorgue (FR); San Jose, Alphonse, 13160 Chateaurenard (FR)
(74) Mandataire: Domange, Maxime

(56) Documents cités:
- FR-A- 2 803 176
- US-A- 6 083 293
- ALDRICH J H ET AL: "Daylily Reponse to Plant Biostimulants" CROPU, XP002148525
- "RETENTION OF GREENNESS OF PLANT USING PLANT GREENNESS RETAINER CONTAINING" CROPU, XP002148527
- BLUNDEN G ET AL: "Enhanced leaf chlorophyll levels in lants treated with seaweed extract" CABA, XP002148528
- YVIN J C: "Nouvelle approche des modes d'action des extraits d'algues en agriculture" CABA, XP002148526

## Description

La présente invention concerne une composition phytosanitaire utile pour augmenter les réactions de défense des plantes.

La présente invention concerne également un procédé de préparation de cette composition ainsi qu'un procédé de traitement de plantes pour la stimulation des réactions de défense aux agents pathogènes d'origine animale ou végétale, notamment par application foliaire.

Les réactions de défense d'une plante à une agression par un pathogène d'origine animale tel qu'un insecte suceur ou d'origine végétale tel qu'un champignon nécessite de la part de la plante une reconnaissance d'un signal d'agression. Cette réaction est appelée élicitation.

L'élicitation de la plante par une agression se traduit par la modification biologique et biochimique de la cellule végétale avec modification de la perméabilité membranaire, production de peroxydase, et fabrication de phytoalexines capables de tuer l'agresseur.

De nombreux travaux ont montré que des polysaccharides ou oligosaccharides, notamment extraits à partir d'algues marines sont capables de provoquer l'élicitation des plantes exactement comme si elles subissaient une agression. A ce jour les travaux sur les éliciteurs de défense des plantes sont réalisés à partir de molécules synthétisées ou isolées et purifiées à partir d'une source naturelle. Ainsi il a été décrit dans FR2 696 454 des compositions à base de Laminarine, qui est un polysaccharide extrait d'algue brune de type PHéophycées et en particulier des Fucales ou des Laminariales. La laminarine est obtenue à partir de ces algues par tout procédé d'extraction permettant d'éliminer successivement les constituant autres que la laminarine. On a également décrit l'action élicitrice d'extrait de l'algue brune Aschophyllum nodosum formulé sous forme d'hydrolysat. Toutefois, dans les deux cas les propriétés élicitrices se sont montrées insuffisantes pour pouvoir envisager une application phytosanitaire efficace.

D'autre part, on a décrit que la glycine bétaïne qui est un dérivé méthylé de la glycine entraîne une réaction d'élicitation lorsqu'elle est appliquée sur les plantes sous forme de glycine bétaïne de synthèse. Toutefois cette molécule présente l'inconvénient d'être toxique pour les plantes sur lesquelles elles sont appliquées, et, en outre, son activité élicitrice demeure également insuffisante.

Le but principal de la présente invention est de fournir une composition à base d'extrait d'algue marine présentant des propriétés accrues d'élicitation des plantes.

Un autre but de la présente invention est de fournir une composition dépourvue de phytotoxicité.

Il a été découvert, et ceci constitue le fondement de la présente invention, qu'une composition essentiellement d'origine naturelle comprenant l'association de deux substances d'origine naturelle et végétale consistant en :
a) un extrait d'algue marine, notamment un hydrolysat d'algue marine d'Aschophyllum nodosum et,
b) une mélasse d'origine végétale, notamment une mélasse de betterave riche en glycine bétaïne,
permet d'obtenir un produit plus actif sur les plantes notamment une réponse de défense plus forte sans phytotoxicité sur les cultures. Cette association présente un effet synergique qui résulte vraisemblablement du fait que lesdites substances actives sont dans leur environnement naturel. Les substances actives poly-saccharidiques, et la glycine bétaïne sont vraisemblablement complexées par les nombreuses substances les accompagnant, notamment acides aminés et oligo-éléments compte tenu de leur origine naturelle.

Plus précisément la présente invention a pour objet une composition à usage phytosanitaire utile pour augmenter les réactions de défense des plantes caractérisée en ce qu'elle contient une quantité efficace d'une composition comprenant une dispersion aqueuse de :
a) un extrait d'algue marine riche en acides aminés et polysaccharides et ayant des propriétés d'élicitation des plantes et,
b) une mélasse d'origine végétale contenant de la glycine bétaïne.

Selon une autre caractéristique originale de la présente invention, il a été découvert que l'activité de cette composition était accrue si son PH était diminué dans une fourchette de 7,2 à 7,7 de préférence 7,3 à 7,5 notamment à l'aide d'une solution tampon, de préférence un tampon phosphate. Les extraits d'algue marine sont en général obtenus à des PH basiques de l'ordre de 9. La demanderesse avait déjà décrit l'utilisation d'une formulation d'extrait d'algue marine Ascophyllum nodosum à PH de 7,5 à 8,3 ayant une activité accrue mais ce PH ne pouvait pas être davantage diminué au risque de gélification des alginates présents dans la composition. C'est un avantage supplémentaire de l'association de l'extrait d'algue marine avec la mélasse d'origine végétale d'avoir permis une diminution supplémentaire du PH. Les extraits de mélasse d'origine végétale, notamment de betteraves contiennent une forte quantité d'acides aminés et de bétaïne, respectivement notamment environ 6 % et 10 % par rapport au produit brut. Et, ces acides organiques très stables présentent l'intérêt de donner un pH de solution légèrement acide à neutre qui n'est pas ou peu modifié par l'ajout de composés alcalinisants ou acidifiants, ce qui permet au cours du procédé de fabrication, d'aboutir à un produit final dont le pH se situe ente 7.3 et 7.5. L'ajout en fin de réaction d'une solution tampon (notamment tampon phosphate), permet de renforcer l'effet naturel des extraits de mélasse.

L'origine naturelle de la composition se traduit par la présence de nombreux acides aminés qui sont présents dans les extraits d'algue marine et dans la mélasse de betterave, un fort pourcentage d'oxyde de potassium de glycine bétaïne et d'acide glutamique caractéristiques des mélasses d'origine végétale notamment des mélasses de betterave et d'un fort pourcentage d'acides alginiques ou alginates caractéristiques des extraits d'algue marine.

De préférence, l'extrait d'algue marine est un hydrolysat d'algue Ascophyllum nodosum.

On utilise également de préférence comme mélasse d'origine végétale, la mélasse de betterave qui est très riche en glycine bétaïne avec notamment des teneurs de 10 à 12 % en poids.

Plus particulièrement la composition selon l'invention comprend un extrait sec total comprenant :
- au moins 8 % en poids de polysaccharides, de préférence au moins 15 %, de préférence encore 8 à 30 %
- au moins 4 % en poids d'acides alginiques, de préférence au moins 10 %, de préférence encore 4 à 15 %
- au moins 8 % en poids de glycine bétaïne, de préférence au moins 12 % de préférence encore entre 8 % et 20 %.
- au moins 5 %, en poids d'acides aminés, de préférence au moins 8 % de préférence encore entre 5 et 10 %. Les acides aminés concernés sont les 21 acides aminés naturels, la glycine bétaïne n'étant pas ici prise en compte.
- au moins 4 % en poids d'acide glutamique, de préférence au moins 8 % de préférence encore entre 4 % et 10 %.
- au moins 8 % en poids d'oxyde de potassium, de préférence au moins 10 %, de préférence encore entre 8 et 15 %.

Dans un exemple de réalisation la composition comprend un extrait sec comprenant :
- 18,5 % de polysaccharide
- 10 % d'acides alginiques ou aliginates
- 8,5 % d'acides aminés,
- 11 % d'oxyde de potassium
- 12,5 % de glycine bétaïne
- 5 % d'acide glutamique

Les pourcentages sont donnés par rapport au poids de l'extrait sec total de la composition.

Il y a lieu de relever que les fortes teneurs en acides aminés, alginates et oxyde de potassium sont dues à l'origine naturelle des extraits constitutifs de la composition selon la présente invention.

Selon une caractéristique particulière la composition selon l'invention présente une densité de 1.2 à 1.25. Cette densité relativement élevée est aussi une des caractéristiques spécifiques de l'origine naturelle de ladite composition.

Selon une autre caractéristique originale de la présente invention la composition comprend des oligo-éléments dont au moins du cuivre et du zinc de préférence au moins 100 mg/kg de cuivre et 100 mg/kg de zinc.

Plus particulièrement le cuivre et le zinc sont présent sous forme de chélates de préférence avec des agents chélateurs choisis parmi l'EDTA et le DTPA.

Ces chélates permettent d'introduire des quantités importantes de cuivre et de zinc en dépit d'un milieu faiblement basique. La présence de cuivre et de zinc a un effet important sur l'activité de la composition.

Selon une caractéristique particulière de la présente invention la composition peut être incorporée à un support ou véhicule acceptable en agriculture.

Selon une autre caractéristique ces compositions peuvent se présenter sous forme solide notamment sous forme de poudre de granulés ou sous forme liquide notamment sous forme de solution aqueuse.

Selon une autre caractéristique particulière ces compositions contiennent en outre au moins une substance additionnelle consistant en un élément inhibiteur de fermentation notamment du type, sel sodique de 4 - chloro 3 ― methyl phénol.

Lorsqu'elles se présentent sous forme liquide, les compositions conformes à l'invention sont de préférence obtenues par dilution dans de l'eau, on peut également envisager toutefois la préparation de compositions pulvérisables à base d'huile ou de concentré émulsifiables, notamment dans le cas de mélanges avec des substances additionnelles non solubles dans l'eau.

Selon un deuxième aspect de la présente invention celle ci concerne un procédé de préparation d'une composition caractérisée en ce qu'elle est obtenue par mélange :
a) d'une poudre obtenue par déshydratation d'un hydrolysat extrait d'algue marine fraîche, et
b) d'une mélasse d'origine végétale de préférence concentrée à au moins 60 % d'extrait sec,
ladite composition étant ensuite éventuellement diluée dans une solution aqueuse.

Selon une caractéristique particulière du procédé la composition comprend :
- 20 à 60 % de préférence environ 40 % de son extrait sec qui provient de l'extrait d'algue marine, et
- 80 à 40 % de préférence environ 60 % de son extrait sec qui provient de la mélasse d'origine végétale.

Plus particulièrement la composition selon l'invention est obtenue en mettant en oeuvre :
- 100 à 250 g/litre provenant de l'extrait de l'algue marine Aschophyllum nodosum et,
- 30 à 40 % en volume/volume de la composition provenant de mélasse de betterave.

Plus particulièrement encore l'extrait d'algue marine est obtenu par double hydrolyse acide et alcaline d'algue fraîche puis déshydratation.

Selon un troisième aspect la présente invention a pour objet un procédé de traitement de plante pour la stimulation des réactions de défense aux agents pathogènes d'origine animale ou végétale caractérisé en ce qu'il comprend l'application de la composition selon l'invention de préférence au niveau foliaire par pulvérisation.

Selon une caractéristique particulière du procédé de traitement on applique une composition selon l'invention résultant de la dilution de 0,2 à 2 litres d'une composition comprenant 30 à 50 % d'extrait sec, diluée dans 100 litres de solution aqueuse.

La quantité de matière sèche de la composition appliquée à l'hectare est de préférence de 800 g à 2000 g.

Les plantes susceptibles d'être traitées avec succès par le procédé selon l'invention sont par exemple : la vigne, les arbres fruitiers, les cultures maraîchères, les céréales, les oléagineux, les protéagineux, de préférence la vigne et les arbres fruitiers.

Les agents pathogènes d'origine animale qui peuvent être traités par le procédé selon l'invention sont les insectes suceurs tels que les pucerons acariens, cicadelles, thrips, psylles et autres insectes utilisant les composés solubles intracellulaires comme source de nutrition, de préférence les pucerons et acariens.

Des agents pathogènes d'origine végétale tels que des champignons notamment le Mildiou Botrytis septoriose, et tout agent pathogène se développant après avoir pénétré et envahi une cellule végétale peuvent aussi être traités.

D'autres caractéristiques et avantages de la présente invention apparaîtront à la lumièrc des exemples détaillés qui vont suivre.

L'exemple 2 fait référence aux figures 1 à 8.

La figure 1 représente les résultats d'incidence de deux applications au sol d'extraits d'algues ALGIFERT K (pH = 9) et IRF 84 (pH = 7,5) sur le développement de l'infection foliaire aux concentrations respectives suivantes (diamètre des nécroses [mm], ■ Témoin, 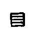 Extrait 200 g/hl et 0,8, □ 400g/hl d'ALGIFERT K et 1,6 L/hl d'IRF84).

La figure 2 représente les résultats variations de l'activité péroxydasique soluble foliaire après deux applications au sol d'extraits d'algues d'ALGIFERT K et respectivement d'IRF84 (pH = 7,5) aux concentrations respectives suivantes (■ Témoin, 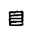 200g/hl Algifert K et 0,8 L/hl d'IRF 84, □ 400 g/hl d'ALGIFERT K et 1,6 L/hl d'IRF 84).

La figure 3 représente les résultats de l'incidence de l'application racinaire de l'IRF84 (composition selon l'exemple 1) sur le taux de capsidiol foliaire (µg) en fonction du temps d'infection (heures) ( 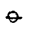 Feuilles témoins, o Feuilles traitées).

La figure 4 représente les résultats de l'incidence de trois applications racinaires de l'IRF84 sur la teneur en chlorophylle des feuilles (mg/g de poids frais en fonction de la concentration de l'extrait).

La figure 5 représente les résultats sur l'incidence de la pulvérisation foliaire de l'IRF84 sur le développement de l'infection de l'IRF 84 et de ses constituants (diamètre des nécroses [mm] ■ Témoin, □ IRF84, 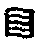 ALGIFERT K, . 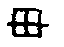 vinasse) .

La figure 6 représente la variation de l'activité de la péroxydasique soluble foliaire en fonction du temps après pulvérisation de l'IRF84 (jours) (■ Témoin, □ IRF 84 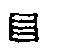 ALGIFERT K, . 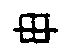 vinasse).

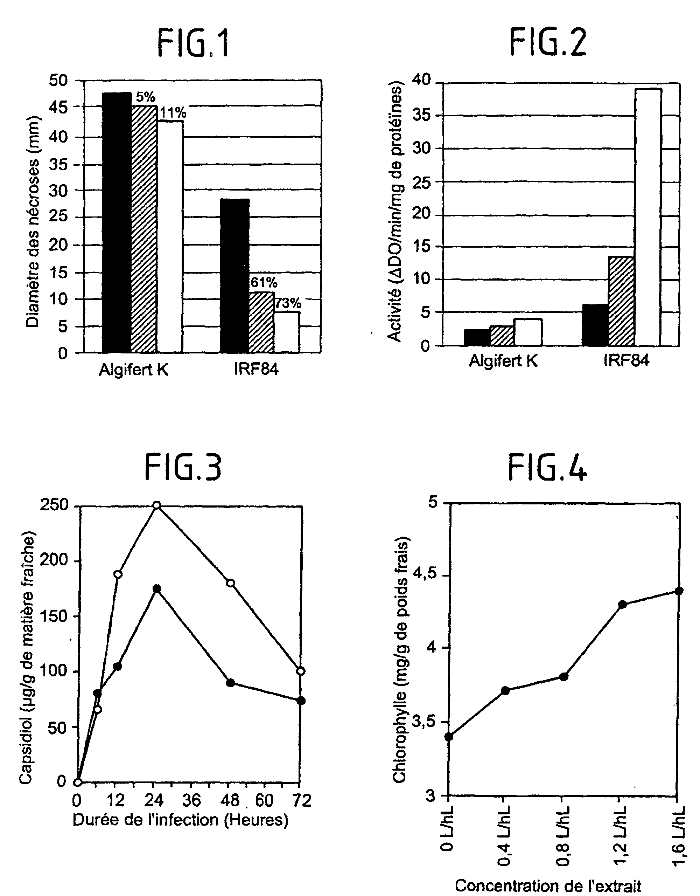

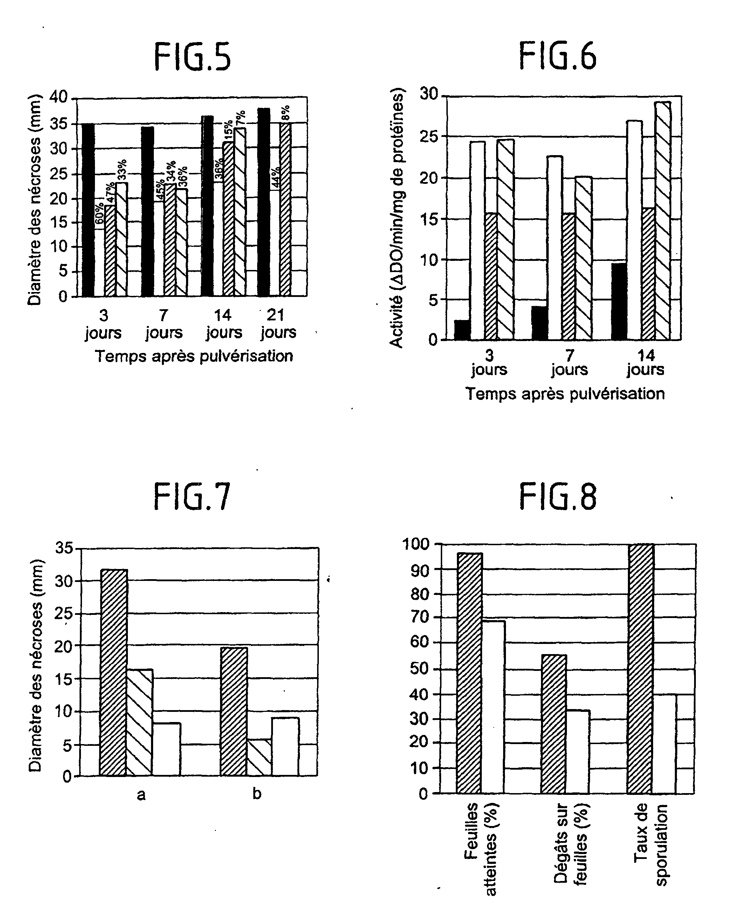

Sur les figures 1 et 5, les valeurs en % correspondent aux taux d'inhibition de l'infection par rapport au témoin.

La figure 7 représente les résultats de la mise en évidence d'une systémie translaminaire après pulvérisation (diamètre des nécroses [mm] (a) = contamination face inférieure, (b) = contamination face supérieure, ■ Témoin, 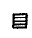 Pulvérisation face supérieure, □ Pulvérisation face inférieure).

La figure 8 représente les résultats de l'incidence de la pulvérisation foliaire de l'IRF84 sur l'infection des feuilles de vigne par le Plasmopara viticola (■ Témoin, □ Extrait 0,8 L/hl).

### Exemple 1 : Procédé de préparation d'une composition à partir d'une formulation d'hydrolisat d'ascophyllum et de mélasse de betterave.

### a) L'hydrolisat d'ascophyllum commercialisé sous la marque Algifert K®, est obtenu de la manière suivante :

Après récolte mécanique de l'algue brune Ascophyllum nodosum, celle-ci est déshydratée et broyée en attendant d'être traitée, la déshydratation évitant le pourrissement de l'algue.

Le produit déshydraté subit ensuite un traitement par double hydrolyse acide puis alcaline à basse température (35° - 50°). Ceci permet de désagréger les fibres cellulosique de l'algue et de mettre en solution des acides aminés et polysaccharides contenus dans l'algue.

En fin de réaction, la solution a un pH de 9. Cette solution est ensuite lentement déshydratée pour obtenir un extrait sec à 95 % de matière sèche.

Le produit algifert K® obtenu présentait les caractéristiques d'analyse chimique suivantes :

| DETERMINATION ANALITIQUE | RESULTATS |
|---|---|
| Masse volumique (NF U 42-401/402° G/M³ | 0.655 (tassée |
| Azote total | 2.06 % |
| Azote nitrique (Colorimétrie) | 0.94 % |
| Azote ammoniacal (77/535 CEE) | 0.064 % |
| Azote uréique (colorimétrie) (AOAC 967-07) | 0.99 % |
| Azote organique (par différence) | 0.99 % |
| Oxyde de potassium total (NF U 42-501) | 3.04 % |
| Bore total (Dir.93/1 CEE méthode 9.1-9.5) | 33.48 mg/kg |
| Cuivre total (NF U 42-501) | 3.00 mg/kg |
| Manganèse total (NF U 42-501) | 5.00 mg/kg |
| Molybdène total (AOAC 1990) | 2.89 mg/kg |
| Zinc total (NF U 42-501) | 26.00 mg/kg |
| Acides aminés totaux | |
| Acide aspartique | 0.36 % |
| Thréonine | 0.04 % |
| Sérine | 0.04 % |
| Acide glutamique | 1.59% |
| Proline | 0.13 % |
| Glycine | 0.20 % |
| Alanine | 0.22 % |
| Valine | 0.19 % |
| Cystine | 0.01 % |
| Méthionine | 0.06 % |
| Isoleucine | 0.10 % |
| Leucine | 0.21 % |
| Tyrosine | 0.04 % |
| Phénylalanine | 0.13 % |
| Histidine | 0.03 % |
| Lysine | 0.02 % |
| Arginine | <0.01 % |
| Glycine bétaïne | <0.1 % |
| Hydrates de carbone totaux | 45 % |
| dont, Acide alginique | 24.5 % |

### b) La mélasse de betterave est obtenue de la manière suivante : on entend ici par mélasse de betterave, un concentré d'extrait liquide de betterave encore appelé "Vinasse concentrée de mélasse"

La Vinasse Concentrée de mélasse est un liquide de couleur brune dont la composition peut légèrement varier en fonction de l'année, des régions d'origine et de la composition de la mélasse, mais dont le tableau ci-dessous comprend des valeurs indicatives :

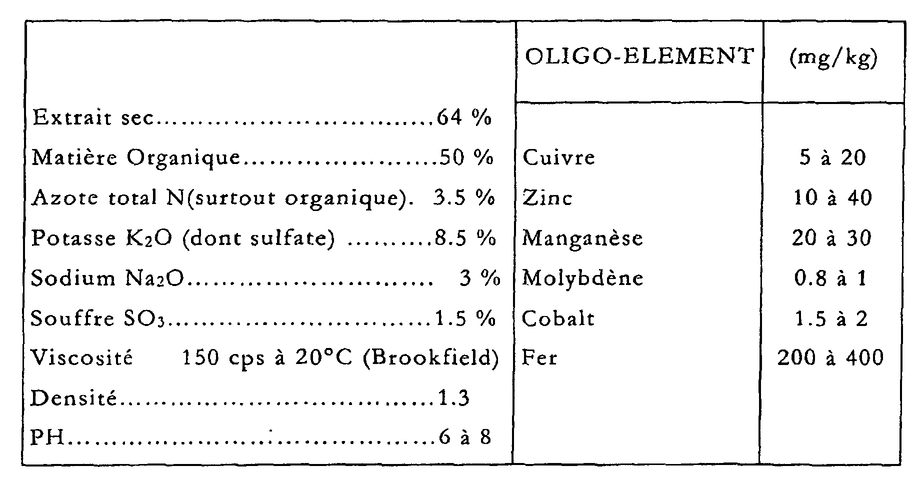

Le concentré obtenu avait un extrait sec de 64 % et un PH de 6 à 8. Ses caractéristiques analytiques étaient les suivantes :

| DETERMINATION ANALITIQUE | RESULTATS | |
|---|---|---|
| Résultats exprimés | P/P | P/V |
| Densité (Pycnomètre) | 1.2807 | |
| Azote total | 3.15 % | 4.03 |
| Azote nitrique (Colorimétrie) | 0.05 % | 0.06 |
| Azote ammoniacal (77/535 CEE) | 0.18 % | 0.228 |
| Azote uréique (colorimétrie) (AOAC 967-07) | 0.71 % | 0.9 |
| Azote organique (par différence) | 2.21 % | 2.83 |
| Oxyde de potassium total (NF U 42-501) | 8.5 % | 10.90 |
| Bore total (Dir.93/1 CEE méthode 9.1-9.5 | 71.90 | 92.1 |
| Cuivre total (NF U 42-501) | 4.60 | 5.89 |
| Manganèse total (NF U 42-501) | 46.50 | 59.6 |
| Molybdène total (AOAC 1990) | 1.01 | 1.29 |
| Zinc total (NF U 42-501 ) | 21.90 | 28.0 |
| Acides aminés totaux | | |
| Acide aspartique | 0.48 mg/kg | 0.61 |
| Thréonine | 0.12 mg/kg | 0.15 |
| Sérine | 0.18 mg/kg | 0.23 |
| Acide glutamique | 3.97 mg/kg | 5.08 |
| Proline | 0.12 mg/kg | 0.15 |
| Glycine | 0.24 mg/kg | 0.31 |
| Alanine | 0.22 mg/kg | 0.28 |
| Valine | 0.15 mg/kg | 0.19 |
| Cystine | 0.08 mg/kg | 0.10 |
| Méthionine | 0.02 mg/kg | 0.025 |
| Isoleucine | 0.10 mg/kg | 0.128 |
| Leucine | 0.14 mg/kg | 0.18 |
| Tyrosine | 0.12 mg/kg | 0.15 |
| Phénylalanine | 0.07 mg/kg | 0.09 |
| Histidine | 0.04 mg/kg | 0.05 |
| Lysine | 0.05 mg/kg | 0.064 |
| Arginine | 0.01 mg/kg | 0.013 |
| Glycine bétaïne | 10.60 mg/kg | 13.57g/100ml |

### c) Préparation de la composition ci-après appelée IRF84.

### Descriptif du procédé de fabrication

La fabrication de IRF 84 se fait par incorporation, mélange et mise en solution des divers composants du produit selon le protocole ci après

La veille de la fabrication, la cuve utilisée pour le mélange est soigneusement désinfectée par une solution à 5% de formaldéhyde, ceci afin d'éviter la présence de bactéries et ou levures susceptibles de provoquer une fermentation du produit fini en cours de stockage.

### Mode Opératoire :

a) Rinçage de la cuve pour éliminer le formaldéhyde
b) Remplissage de la cuve avec la quantité d'eau nécessaire
c) En vitesse lente (1000 rpm) ajouter progressivement algifert K®
d) En vitesse rapide (1500 rpm) réaliser la dissolution de algifert K® en cours de manipulation vérifier le niveau de solubilité poursuivre l'agitation rapide encore ¼ d'heure après dissolution totale de l'algifert K
e) En vitesse lente, ajouter progressivement l'extrait de betterave
f) Vérifier le pH de la solution en fin d'incorporation
g) Ajouter la quantité de tampon nécessaire et suffisante pour un pH 7.3-7.5
h) Après ¼ d'heure d'agitation ajouter le conservateur Préventol.

### Exemple de fabrication pour une quantité de 1300 litres d'IRF :

- On rince la cuve pour éliminer le formaldéhyde.
- On remplit la cuve avec la quantité d'eau nécessaire : 767 l
- En vitesse lente (1000 rpm) on ajoute progressivement algifert K®: 260 kg
- En vitesse rapide (1500 rpm) on réalise la dissolution de algifert K®.
- En cours de manipulation on vérifie le niveau de solubilité.
- On poursuit l'agitation rapide encore ¼ d'heure après dissolution totale de l'algifert K®.
- En vitesse lente, on ajoute progressivement l'extrait de betterave : 390 l (503kg)
- On vérifie le pH de la solution en fin d'incorporation.
- On ajoute la quantité de tampon nécessaire et suffisante pour un pH 7.3-7.5.
- Après ¼ d'heure d'agitation on ajoute le conservateur Préventol : 6.5 kg
- La composition obtenue est appelée IRF 84 (40/60) contient 40 % de son extrait sec qui provient de l'algue marine et 60 % de la mélasse d'origine végétale.

La composition IRF 40/60 obtenue présentait un extrait sec de 48.9 %, ses caractéristiques analytiques sont les suivantes :

| DETERMINATION ANALITIQUE | RESULTATS | |
|---|---|---|
| Résultats exprimés | P/P | P/V |
| Densité (Pycnomètre) | 1.239 | |
| Azote total | 1.88 % | 2.33 % |
| Azote nitrique (Colorimétrie) | 0.18 % | 0.22 % |
| Azote ammoniacal (77/535 CEE) | 0.084 % | 0.104 % |
| Azote uréique (colorimétrie) (AOAC 967-07) | 0.078 % | 0.098 % |
| Azote organique (par différence) | 1.54 % | 1.91 % |
| Oxyde de potassium total (NF U 42-501) | 5.44 % | 6.73 % |
| Bore total (Dir.93/1 CEE méthode 9.1-9.5 | 16.45 mg/kg | 20.4 mg/l |
| Cuivre total (NF U 42-501) | 4.90 mg/kg | 6.1 mg/l |
| Manganèse total (NF U 42-501) | 21.40 mg/kg | 26.5 mg/l |
| Molybdène total (AOAC 1990) | 1.58 mg/kg | 1.96 mg/l |
| Zinc total (NF U 42-501 ) | 18.10 mg/kg | 22.4 mg/l |
| Acides aminés totaux | 4.28 % | |
| Acide aspartique | 0.38 % | 0.47 % |
| Thréonine | 0.12 % | 0.15 % |
| Sérine | 0.13 % | 0.16 % |
| Acide glutamique | 2.22 % | 2.75 % |
| Proline | 0.12 % | 0.15 % |
| Glycine | 0.20 % | 0.25 % |
| Alanine | 0.20 % | 0.25 % |
| Valine | 0.16 | 0.20 % |
| Cystine | 0.04 % | 0.05 % |
| Méthionine | 0.04 % | 0.05 % |
| Isoleucine | 0.12 % | 0.15 % |
| Leucine | 0.19 % | 0.24 % |
| Tyrosine | 0.10 | 0.12 % |
| Phénylalanine | 0.11 % | 0.14 % |
| Histidine | 0.04 % | 0.05 % |
| Lysine | 0.07 % | 0.09 % |
| Arginine | 0.04 | 0.05 % |
| Glycine bétaïne | 4.19 % | 5.19 g/100ml |
| Hydrates de carbone (polysaccharide) | 9 % | 11.5 % |
| Acides alginiques | 4.9 % | 6 % |

### Exemple 2 : Activité élicitrice

L'action d'un effecteur agrobiologique de l'exemple 1 (IRF 84) issu de l'association de l'Algifert K® extrait de l'algue brune (Ascophyllum nodosum ) et de Vinasse (extrait de la betterave) a été étudiée :
- en laboratoire sur une solanacée le poivron (Capsicum annuum) dont l'infection par le *Phytophthora* capsici agent du mildiou, cause de graves préjudices aux cultures.
- en serre sur de jeunes plants de vigne (Vitis vinifera) infectés par le Plasmopara viticola agent du mildiou.

Les produits sont appliqués à différentes concentrations soit par trempage des godets, soit par pulvérisation du système foliaire.

### I - Application du produit au niveau racinaire par trempage des godets renfermant le terreau et les jeunes plants,

Deux concentrations d'IRF84 (0,8 et 1,6L/hl) ont été testées correspondant à 200g/hl et 400g/hL d'Algifert K®, c'est à dire la dose d'efficacité maximale et le double de la dose d'efficacité maximale. Deux applications ont été pratiquées à 7 jours d'intervalle.

L'efficacité des différentes solutions a été appréciée sur les feuilles de niveau 3 et 4 récoltées et mises en survie dans de grandes boîtes de Pétri. Les inoculations ont été réalisées sur la face inférieure des feuilles riche en stomates, par dépôt d'une pastille de Mycélium de 4 mm de diamètre (culture de Phytophthora capsici sur milieu gélosé) Des nécroses se développent. Leur taille est mesurée trois jours après l'inoculation.

### 1) Incidence de l'application racinaire des extraits sur le développement de l'infection. Les résultats sont présentés sur la figure 1.

Après deux trempages à 7 jours d'intervalle, on constate que l'action de l'IRF84 au niveau du système racinaire des plantules se traduit au niveau foliaire par une diminution sensible de la taille des nécroses. La résistance acquise est proportionnelle à la concentration de l'extrait et augmente fortement jusqu'à atteindre 73% après deux applications de l'extrait le plus concentré. L'Algifert K® présente au contraire une faible efficacité avec un taux d'inhibition des nécroses de 11 % seulement.

Cette résistance induite a été caractérisée bio chimiquement en appréciant le niveau d'activité des peroxydases solubles dans les feuilles des plants traités ainsi que la concentration en capsidiol après que les feuilles aient été infectées par le Phytophthora capsici

### 2) Incidence de l'application racinaire des extraits sur l'activité péroxydasique soluble foliaire. Les résultats sont présentés sur la figure 2.

Les peroxydases sont des enzymes du métabolisme oxydatif qui interviennent dans le processus de lignification des parois (élaboration des appositions pariétales qui font obstacle à la pénétration du champignon) et, dans l'oxydation des phénols en quinones très fongitoxiques.

Deux applications de l'IRF84 à la concentration de 1,6L/hL provoquent une forte stimulation (x8) de l'activité péroxydasique soluble. La stimulation est déjà très significative pour 0,8L/hL. Aux concentrations correspondantes, l'Algifert K® ne présente aucun effet

### 3) Incidence de l'application racinaire de l'IRF84 sur le taux de capsidiol foliaire au cours de l'infection. Les résultats sont présentés sur la figure 3

Le capsidiol est la phytoalexine que les cellules-hôte du poivron synthétisent en réponse à l'infection. Sa concentration est déterminante pour l'établissement de la résistance car, ce composé de nature sesquiterpénique a une action fongistatique sur le développement du pathogène.

Après deux applications de l'IRF84 à 0,8L/hL pratiquées à 7 jours d'intervalle, les feuilles sont prélevées et contaminées. Le capsidiol est dosé au bout de 0 - 6 - 12 - 24 - 48 et 72 heures d'infection.

On constate que, au cours des 72 premières heures de l'infection, la concentration en capsidiol dans les feuilles traitées et contaminées est nettement supérieure à celle des feuilles sensibles témoins. Dans les deux cas, la concentration maximale se situe à 24 heures d'infection où elle atteint 250 µg chez les feuilles traitées. Cette valeur est l'une des plus élevées signalée à ce jour. Après 24 heures, la concentration décroît dans les deux échantillons mais, à. 48 heures, elle est deux fois plus élevée chez la feuille traitée que chez le témoin.

Les feuilles, dont la résistance a été induite, franchissent avec un minimum d'altérations le cap des 48 heures d'infection qui, chez les plantes non traitées se traduit par des lésions importantes et irréversibles comme en témoignent les micrographies obtenues en microscopie électronique sur des coupes pratiquées chez les feuilles sensibles et induites infectées.

### 4) Incidence de l'application racinaire de l'IRF84 au niveau de l'ultra structure des cellules foliaires.

Les tissus sensibles témoins sont envahis par de nombreuses hyphes intercellulaires. Elles développent des suçoirs ou haustoria à l'intérieur des cellules-hôte qui dégénèrent rapidement créant une zone de nécrose caractéristique

Dans les tissus foliaires des plantes traitées la progression du champignon est freinée ou stoppée par la formation d'appositions pariétales constituées de polysaccharides et de composés phénoliques dont les formes oxydées sont très fongitoxiques. A l'intérieur de ces encapsulations, les haustoria dégénèrent et les celulles-hôte sont protégées. Ces formations et la concentration élevée en capsidiol sont responsables de la forte diminution de la taille des nécroses observées sur les feuilles des plantes traitées.

### 5) Incidence de l'application de l'IRF84 sur la concentration en chlorophylle. Les résultats sont présentés sur la figure 4

L'application racinaire de l'extrait provoque une augmentation de la teneur en chlorophylle des tissus foliaires. Cette augmentation est proportionnelle à la concentration de l'extrait.

### II. Incidence de la pulvérisation foliaire de l'IRF84 et de ses constituants

- **sur l'interaction Piment - Phytophthora capsici**
- **sur l'interaction Vigne -Plasmopara Viticole**

### 1) Incidence sur le développement de l'infection, appréciation de la rémanence (fig. 5).

Après une pulvérisation d'IRF84 à la concentration de 1,6L/hL, (d'Algifert K® à la concentration de 400g/hL ou de Vinasse à la concentration de 0,7L/hL), les feuilles sont infectées 1 - 4 - 7 - 14 et 21 jours après le traitement. Le développement des nécroses est apprécié après trois jours d'infection.

On constate que la résistance induite par l'IRF84 est maximale 4 jours après la pulvérisation et atteint 60%. Cette induction se maintien aux environs de 40% jusqu'au 21ème jour. La résistance acquise avec chacun des deux constituants de l'IRF84 est plus faible (47 % et 33 % respectivement avec l'Algifert K® et avec la Vinasse 4 jours après le traitement) et diminue rapidement puisqu'au 14ème jour elle n'est plus que de 15% et 7%.

### 2) Incidence sur l'activité péroxydasique soluble des feuilles (fig. 6)

Après une seule pulvérisation d'IRF84 à la concentration de 1,6L/hL, l'activité péroxydasique soluble augmente rapidement en fonction du temps. Elle est décuplée 3 jours après la pulvérisation et se maintient jusqu'au 14ème jour de l'expérience La Vinasse provoque des effets similaires tandis que l'Algifert K® se révèle moins efficace (facteur 6 au 3ème jour).

### 3) Mise en évidence d'une systémie translaminaire après pulvérisation de l'IRF84 (fig. 7)

On constate que l'infection évolue beaucoup plus rapidement chez le témoin. lorsque la contamination est pratiquée sur la face inférieure de la feuille. D'autre part, il existe une systémie translaminaire significative bien que la résistance appréciée sur l'autre face soit toujours légèrement inférieure à celle de la face traitée.

### 4) Incidence de la pulvérisation foliaire de l'IRF84 sur l'infection des feuilles de vigne par le Plasmopara viticole (fig. 8)

Des essais de criblage ont été réalisés sur vigne, sous serre et en condition de contamination artificielle : 5 pulvérisations du produit à la dose de 0,8L/hL ont été pratiquées à 7 jours d'intervalle. La contamination par Plasmopara viticola a lieu après le troisième traitement. Les résultats observés trois semaines après la contamination ont montré une réduction importante du pourcentage de feuilles atteintes (28%) et de celui des dégâts sur feuilles (40%). Le taux de sporulation diminuant de plus de 50% par rapport au témoin, prouve l'action antisporulante du produit

Des résultats similaires ont été observés sur les interactions Blé - Septoriose, Fraise-Botrytis.

### Conclusion

L'extrait IRF 84 permet donc à la plante sensible de réagir efficacement à la pénétration du champignon et de sauvegarder l'intégrité de la structure des tissus La plante met en place pour cela un métabolisme en tout point comparable à celui impliqué consécutivement à l'emploi d'autres substances de type éliciteur. L'élicitation est provoquée par l'action de certaines classes de molécules sur les cellules. Les glycines bétaïnes contenues en grande quantité dans la Vinasse ainsi que les oligo et polysaccharides de l'Algifert K® font partie de ces substances. Utilisés séparément les deux constituants de l'IRF84 présentent une efficacité que leur association est donc bénéfique et conduit, vraisemblablement par effet de synergie entre différentes substances élicitrices, et vraisemblablement par effet de leur origine naturelle à la création d'un puissant Inducteur de Résistance Fongique.

## Revendications

1. Procédé de traitement de plante pour la stimulation des réactions de défense aux agents pathogènes d'origine animale ou végétale **caractérisé en ce qu'**il comprend l'application, de préférence au niveau foliaire par pulvérisation d'une composition comprenant l'association de :
a) un extrait d'algue marine riche en acides aminés et polysaccharides et ayant des propriétés d'élicitation des plantes et,
b) une mélasse d'origine végétale contenant de la glycine bétaïne.

2. Procédé suivant la revendication 1 **caractérisé en ce que** ladite composition comprend un extrait d'algue marine qui est un hydrolysat d'algue Ascophyllum nodosum.

3. Procédé suivant la revendication 1 ou 2 **caractérisé en ce que** ladite composition comprend une mélasse de betterave.

4. Procédé selon l'une quelconque des revendications 1 à 3 **caractérisé en ce que** ladite composition est tamponnée de manière à obtenir un pH de 7,2 à 7,7, de préférence 7,3 à 7,5, de préférence encore avec un tampon phosphate.

5. Procédé selon l'une quelconque des revendications 1 à 4 **caractérisé en ce que** ladite composition comprend au moins 8 % en poids de glycine bétaïne par rapport à son extrait sec total, de préférence au moins 12 %, de préférence encore entre 8 % et 20 %.

6. Procédé selon l'une quelconque des revendications 1 à 5 . **caractérisé en ce que** dans ladite composition la teneur en poids en acides aminés est d'au moins 5 %, de préférence au moins 8 % de préférence encore entre 5 % et 10 % du poids de l'extrait sec total de la composition.

7. Procédé selon l'une quelconque des revendications précédentes **caractérisé en ce que** ladite composition comprend au moins 4 % d'acide glutamique de préférence au moins 8 % d'acide glutamique, de préférence encore entre 4 % et 10 % par rapport au poids de son extrait sec total.

8. Procédé selon l'une quelconque des revendications précédentes **caractérisé en ce que** ladite composition comprend au moins 8 % en poids d'oxyde de potassium dans son extrait sec, de préférence au moins 10 %, de préférence encore entre 8 % et 15 %.

9. Procédé selon l'une quelconque des revendications 1 à 8 **caractérisé en ce que** l'extrait sec de ladite composition comprend en proportion en poids :
- au moins 8 % de polysaccharides, de préférence au moins 15 %, de préférence encore entre 8 % et 30 %, et
- au moins 4 % d'acides alginiques ou alginates, de préférence au moins 10 %, de préférence encore entre 4 % et 15 %

10. Procédé selon l'une quelconque des revendications précédentes **caractérisé en ce que** l'extrait sec de ladite composition comprend en proportion en poids :
18.5 % de polysaccharides
10 % d'acides alginiques
8.5 % d'acides aminés,
11 % d'oxyde de potassium
12.5 % de glycine bétaïne
5 % d'acide glutamique

11. Procédé selon l'une quelconque des revendications 1 à 10 **caractérisé en ce que** la densité de la composition est comprise entre 1.2 et 1.25.

12. Procédé selon l'une quelconque des revendications précédentes **caractérisé en ce que** ladite composition comprend des oligo-éléments dont au moins du cuivre et du zinc de préférence au moins 100 mg/kg de cuivre et 100 mg/kg de zinc.

13. Procédé suivant la revendication 12 **caractérisé en ce que** le cuivre et le zinc sont présents dans ladite composition sous forme de chélates de préférence avec des agents chélateurs choisis parmi l'EDTA et le DTPA.

14. Procédé suivant la revendication 13 **caractérisé en ce qu'**il comprend l'application d'une composition selon l'une quelconque des revendications 1 à 13 résultant de la dilution de 0,2 à 2 litres d'une composition comprenant 30 à 50 % d'extrait sec, diluée dans 100 litres de solution aqueuse.

15. Procédé de traitement de plantes selon l'une quelconque des revendications 1 à 14 **caractérisé en ce que** l'on traite les plantes suivantes : la vigne, les arbres fruitiers, les cultures maraîchères, les céréales, les oléagineux, les protéagineux, de préférence la vigne et les arbres fruitiers.

16. Procédé de traitement selon l'une quelconque des revendications 1 à 15 **caractérisé en ce que** l'on traite des plantes pour lutter contre la pathogène d'origine animale, de préférence des insectes suceurs, de préférence encore des pucerons et acariens ou des pathogènes d'origine végétale, de préférence des champignons, de préférence encore le Mildiou Botrytis.

17. Composition à usage phytosanitaire utile pour augmenter les réactions de défense des plantes **caractérisée en ce qu'**elle contient une quantité efficace d'une composition telle que définie dans les revendications 1 à 13 et dans laquelle ladite composition est tamponnée de manière à obtenir un pH de 7,2 à 7,7, de préférence 7,3 à 7,5.

18. Procédé de préparation d'une composition selon la revendication 17 **caractérisée en ce qu'**elle est obtenue par mélange
a) d'une poudre obtenue par déshydratation d'un hydrolysat extrait d'algue marine fraîche, et
b) d'une mélasse d'origine végétale de préférence concentrée à au moins 60 % d'extrait sec,
ladite composition étant ensuite éventuellement diluée dans une solution aqueuse, et le PH est maintenu, à l'aide d'une solution tampon, à un PH de 7,2 à 7, 7 de préférence 7,3 à 7,5 de préférence un tampon phosphate.

19. Procédé suivant la revendication 18, **caractérisé en ce que** la composition comprend
- 20 à 60 % de préférence environ 40 % de son extrait sec qui provient de l'extrait d'algue marine, et
- 80 à 40 % de préférence environ 60 % de son extrait sec qui provient de la mélasse d'origine végétale.

20. Procédé suivant la revendication 19 **caractérisé en ce que** la composition est obtenue en mettant en oeuvre :
- 100 à 250 g/litre provenant de l'extrait de l'algue marine Aschophyllum nodossum et,
- 30 à 40 % en volume/volume de la composition provenant de mélasse de betterave.

21. Procédé selon l'une quelconque des revendications 18 à 20 **caractérisé en ce que** l'extrait d'algue marine est obtenu par double hydrolyse acide et alcaline d'algue fraîche puis déshydratation.

## Patentansprüche

1. Verfahren zur Behandlung von Pflanzen zur Stimulierung von Abwehrreaktionen gegen pathogene Erreger tierischen oder pflanzlichen Ursprungs, **dadurch gekennzeichnet, dass** es die Auftragung, vorzugsweise auf Blattniveau, durch Zerstäubung einer Zusammensetzung umfasst, welche in Verbindung umfasst:
a) einen Meeresalgenextrakt, der reich an Aminosäuren und Polysacchariden ist und welcher Eigenschaften aufweist, um Pflanzen anzuregen, und
b) eine Melasse pflanzlichen Ursprungs, welche Glycinbetain enthält.

2. Verfahren nach Anspruch 1, **dadurch gekennzeichnet, dass** die genannte Zusammensetzung einen Meeresalgenextrakt umfasst, welcher ein Hydrolysat der Alge Ascophyllum nodosum ist.

3. Verfahren nach Anspruch 1 oder 2, **dadurch gekennzeichnet, dass** die genannte Zusammensetzung eine Rübenmelasse umfasst.

4. Verfahren nach irgendeinem der Ansprüche 1 bis 3, **dadurch gekennzeichnet, dass** die genannte Zusammensetzung derart, dass ein pH von 7,2 bis 7,7, vorzugsweise 7,3 bis 7,5 erhalten wird, noch bevorzugter mit einem Phosphatpuffer gepuffert ist.

5. Verfahren nach irgendeinem der Ansprüche 1 bis 4, **dadurch gekennzeichnet, dass** die genannte Zusammensetzung wenigstens 8 Gew.-% Glycinbetain bezogen auf ihren Gesamttrockenextrakt, vorzugsweise wenigstens 12%, noch bevorzugter zwischen 8% und 20% umfasst.

6. Verfahren nach irgendeinem der Ansprüche 1 bis 5, **dadurch gekennzeichnet, dass** in der genannten Zusammensetzung der Gehalt bezogen auf das Gewicht an Aminosäuren wenigstens 5%, vorzugsweise wenigstens 8%, noch bevorzugter zwischen 5% und 10% des Gewichts des Gesamttrockenextrakts der Zusammensetzung beträgt.

7. Verfahren nach irgendeinem der vorhergehenden Ansprüche, **dadurch gekennzeichnet, dass** die genannte Zusammensetzung wenigstens 4% Glutaminsäure, vorzugsweise wenigstens 8% Glutaminsäure, noch bevorzugter zwischen 4% und 10% bezogen auf das Gewicht von deren Gesamttrockenextrakt umfasst.

8. Verfahren nach irgendeinem der vorhergehenden Ansprüche, **dadurch gekennzeichnet, dass** die genannte Zusammensetzung wenigstens 8 Gew.-% Kaliumoxid in ihrem Trockenextrakt, vorzugsweise wenigstens 10%, noch bevorzugter zwischen 8% und 15% umfasst.

9. Verfahren nach irgendeinem der Ansprüche 1 bis 8, **dadurch gekennzeichnet, dass** der Trockenextrakt der genannten Zusammensetzung in Gewichtsteilen umfasst:
- wenigstens 8% Polysaccharide, vorzugsweise wenigstens 15%, noch bevorzugter zwischen 8% und 30%, und
- wenigstens 4% Alginsäuren oder Alginate, vorzugsweise wenigstens 10%, noch bevorzugter zwischen 4% und 15%.

10. Verfahren nach irgendeinem der vorhergehenden Ansprüche, **dadurch gekennzeichnet, dass** der Trockenextrakt der genannten Zusammensetzung in Gewichtsteilen umfasst:
18,5% Polysaccharide
10% Alginsäuren
8,5% Aminosäuren
11% Kaliumoxid
12,5% Glycinbetain
5% Glutaminsäure.

11. Verfahren nach irgendeinem der Ansprüche 1 bis 10, **dadurch gekennzeichnet, dass** die Dichte der Zusammensetzung zwischen 1,2 und 1,25 liegt.

12. Verfahren nach irgendeinem der vorhergehenden Ansprüche, **dadurch gekennzeichnet, dass** die genannte Zusammensetzung Spurenelemente umfasst, die wenigstens Kupfer und Zink, vorzugsweise wenigstens 100 mg/kg Kupfer und 100 mg/kg Zink umfassen.

13. Verfahren nach Anspruch 12, **dadurch gekennzeichnet, dass** das Kupfer und das Zink in der genannten Zusammensetzung in Form von Chelaten, vorzugsweise mit Chelatbildnern, die ausgewählt sind aus EDTA und DTPA, vorliegen.

14. Verfahren nach Anspruch 13, **dadurch gekennzeichnet, dass** es die Anwendung einer Zusammensetzung nach irgendeinem der Ansprüche 1 bis 13 umfasst, welche aus der Verdünnung von 0,2 bis 2 Litern einer Zusammensetzung resultiert, die 30 bis 50% Trockenextrakt umfasst, welche in 100 Litern wässriger Lösung verdünnt wird.

15. Verfahren zur Behandlung von Pflanzen nach irgendeinem der Ansprüche 1 bis 14, **dadurch gekennzeichnet, dass** man die folgenden Pflanzen behandelt: die Weinrebe, die Obstbäume, die Gemüsekulturen, die Getreide, die Ölpflanzen, die Proteinpflanzen, vorzugsweise die Weinrebe und die Obstbäume.

16. Verfahren zur Behandlung nach irgendeinem der Ansprüche 1 bis 15, **dadurch gekennzeichnet, dass** man die Pflanzen behandelt, um Pathogene tierischen Ursprungs, vorzugsweise saugende Insekten, noch bevorzugter Blattläuse und Milben, oder Pathogene pflanzlichen Ursprungs, vorzugsweise Pilze, noch bevorzugter Mehltau Botrytis zu bekämpfen.

17. Zusammensetzung zur phytosanitären Verwendung, die nützlich ist, um die Abwehrreaktionen von Pflanzen zu verstärken, **dadurch gekennzeichnet, dass** diese eine wirksame Menge einer Zusammensetzung, wie sie in den Ansprüchen 1 bis 13 definiert ist, enthält und bei welcher die genannte Zusammensetzung in der Weise gepuffert ist, dass ein pH von 7,2 bis 7,7, vorzugsweise 7,3 bis 7,5, erhalten wird.

18. Verfahren zur Herstellung einer Zusammensetzung nach Anspruch 17, **dadurch gekennzeichnet, dass** diese erhalten wird durch Mischen von
a) einem Pulver, das durch Dehydratisierung eines Hydrolysatextrakts von frischen Meeresalgen erhalten wird, und
b) einer Melasse pflanzlichen Ursprungs, die vorzugsweise auf wenigstens 60% des Trockenextrakts konzentriert ist,
wobei die Zusammensetzung anschließend gegebenenfalls in einer wässrigen Lösung verdünnt wird und der pH mit Hilfe einer Pufferlösung bei einem pH von 7,2 bis 7,7, vorzugsweise 7,3 bis 7,5, vorzugsweise mit einem Phosphatpuffer, gehalten wird.

19. Verfahren nach Anspruch 18, **dadurch gekennzeichnet, dass** die Zusammensetzung umfasst:
- 20 bis 60%, vorzugsweise ca. 40% ihres Trockenextrakts, welcher aus dem Meeresalgenextrakt stammt, und
- 80 bis 40%, vorzugsweise ca. 60% ihres Trockenextrakts, welcher aus der Melasse pflanzlichen Ursprungs stammt.

20. Verfahren nach Anspruch 19, **dadurch gekennzeichnet, dass** die Zusammensetzung erhalten wird, indem eingesetzt werden:
- 100 bis 250 g/Liter, die aus dem Extrakt der Meeresalge Ascophyllum nodosum stammen, und
- 30 bis 40 Volumen-% der Zusammensetzung, die aus einer Rübenmelasse stammt

21. Verfahren nach irgendeinem der Ansprüche 18 bis 20, **dadurch gekennzeichnet, dass** der Meeresalgenextrakt durch doppelte Säure- und Alkalihydrolyse von frischen Algen und dann Dehydratisierung erhalten wird.

## Claims

1. Plant treatment method to stimulate defence reactions against pathogenic agents of plant or animal origin, **characterized in that** it comprises the application, preferably by foliar spraying, of a composition containing the association of:
a) a seaweed extract rich in amino acids and polysaccharides and having plant elicitation properties, and
b) a molasses of plant origin containing glycine betaine.

2. Method according to claim 1, **characterized in that** said composition contains a seaweed extract which is a hydrolysate of *Ascophyllum nodosum*.

3. Method according to claim 1 or 2, **characterized in that** said composition contains a beetroot molasses.

4. Method according to any of claims 1 to 3, **characterized in that** said composition is buffered so as to obtain a pH of 7.2 to 7.7, preferably 7.3 to 7.5, further preferably with a phosphate buffer.

5. Method according to any of claims 1 to 4, **characterized in that** said composition contains at least 8 % by weight of glycine betaine relative to its total dry extract, preferably at least 12 %, further preferably between 8 % and 20 %.

6. Method according to any of claims 1 to 5, **characterized in that** in said composition the amino acid content is at least 5 % by weight, preferably at least 8 %, further preferably between 5 % and 10 % of the weight of the total dry extract of the composition.

7. Method according to any of the preceding claims, **characterized in that** said composition contains at least 4 % glutamic acid, preferably at least 8 % glutamic acid, further preferably between 4 % and 10 % relative to the weight of its total dry extract.

8. Method according to any of the preceding claims, **characterized in that** said composition contains at least 8 % by weight of potassium oxide in its dry extract, preferably at least 10 %, and further preferably between 8 % and 15 %.

9. Method according to any of claims 1 to 8, **characterized in that** the dry extract of said composition contains a weight proportion of:
- at least 8 % polysaccharides, preferably at least 15 %, further preferably between 8 % and 30 %, and
- at least 4 % alginic or alginate acids, preferably at least 10 %, further preferably between 4 % and 15 %.

10. Method according to any of the preceding claims, **characterized in that** the dry extract of said composition contains a weight proportion of:
18.5 % polysaccharides
10.0 % alginic acids
8.5 % amino acids
11.0 % potassium oxide
12.5 % glycine betaine
5.0 % glutamic acid.

11. Method according to any of claims 1 to 10, **characterized in that** the density of the composition lies between 1.2 and 1.25.

12. Method according to any of the preceding claims, **characterized in that** said composition contains trace elements including at least copper and zinc, preferably at least 100 mg/kg copper and 100 mg/kg zinc.

13. Method according to claim 12, **characterized in that** the copper and zinc are present in said composition in the form of chelates, preferably with chelating agents chosen from among EDTA and DTPA.

14. Method according to claim 13, **characterized in that** it comprises the application of a composition according to any of claims 1 to 13 resulting from the dilution of 0.2 to 2 litres of a composition containing 30 to 50 % dry extract, diluted in 100 litres of aqueous solution.

15. Plant treatment method according to any of claims 1 to 14, **characterized in that** the following plants are treated: vines, fruit trees, market garden crops, cereals, oleaginous plants, proteaginous plants, preferably vines and fruit trees.

16. Treatment method according to any of claims 1 to 15, **characterized in that** plants are treated to fight against pathogens of animal origin, preferably sucking insects, further preferably aphids, Acarina, or pathogens of plant origin, preferably fungi, further preferably Botrytis mildew.

17. Composition for phytosanitary use which can be used to increase plant defence reactions, **characterized in that** it contains an efficient quantity of a composition such as defined in claims 1 to 13 and in which said composition is buffered to obtain a pH of 7.2 to 7.7, preferably 7.3 to 7.5.

18. Method for preparing a composition according to claim 17, **characterized in that** it is obtained by mixing:
a) a powder obtained by dehydrating a hydrolysate extracted from fresh seaweed, and
b) a molasses of plant origin, preferably concentrated to at least 60 % dry extract,
said composition optionally being subsequently diluted in an aqueous solution, and the pH is maintained by means of a buffer solution at a pH of 7.2 to 7.7, preferably 7.3 to 7.5, preferably a phosphate buffer.

19. Method according to claim 18, **characterized in that** the composition contains:
- 20 to 60 %, preferably approximately 40 %, of its dry extract derived from the seaweed extract, and
- 80 to 40 %, preferably approximately 60 %, of its dry extract derived from the molasses of plant origin.

20. Method according to claim 19, **characterized in that** the composition is obtained by using:
- 100 to 250 g/litre derived from the extract of *Aschophyllum nodosum* seaweed and,
- 30 to 40 % volume/volume of the composition derived from beetroot molasses.

21. Method according to any of claims 18 to 20, **characterized in that** the seaweed extract is obtained by dual acid and alkaline hydrolysis of fresh seaweed followed by dehydration.
